# EUROPEAN PATENT APPLICATION

(11) **EP 2 048 015 A2**
(43) Date of publication of application: **15.04.2009**
(21) Application number: 08017828.8
(22) Date of filing: 10.10.2008
(51) Int. Cl.: B60K 5/12, B62K 11/02, B62M 7/04

(54) **Straddle-type vehicle**

(30) Priority: 10.10.2007 JP 2007264954
(71) Applicant: Yamaha Hatsudoki Kabushiki Kaisha, Iwata-shi, Shizuoka 438-8501 (JP)
(72) Inventor: Shinsho, Masami, Iwata-shi Shizuoka-ken 438-8501 (JP)
(74) Representative: Grünecker, Kinkeldey, Stockmair & Schwanhäusser Anwaltssozietät

(57) **Abstract**

The present invention relates to a straddle-type vehicle comprising: a vehicle body frame (2); an engine (8,50) fixed to the vehicle body frame by means of at least one engine bracket (10,51), the engine bracket including a first flange portion (10a,51a) connected to the vehicle body frame and a second flange portion (10b,51b) connected to the engine, and wherein a distance (p1) between first fixing holes (10h) by which the first flange portion is fixed to the vehicle body frame is larger than a distance (p2) between second fixing holes (10i) by which the second flange portion is fixed to the engine.

## Description

The present invention relates to a straddle-type vehicle in which an engine is fixed to a vehicle body frame via an engine bracket.

For example, in a motorcycle mounted with a V-type engine, there is a case where the front and rear cylinder parts of the V-type engine are fixed to a vehicle body frame via an engine bracket. In Japanese Unexamined Patent Publication No. 2007-137408, the fixing portions of the upper end portion of an engine bracket extended in an up and down direction are fixed to a vehicle body frame, and the front and rear fixing portions of the lower end portion of the engine bracket are fixed to the front and rear cylinder parts.

However, in a structure in which an engine is supported by the above-mentioned conventional engine bracket, a distance between the front and rear fixing portions of the lower end portion of the engine bracket is larger than a distance between the fixing portions of the upper end portion. Thus, this raises the problem of making it difficult for the engine bracket to ensure necessary supporting rigidity on the frame side. The present invention has been made in view of the above-mentioned circumstances in the conventional technology.

It is an objective of the present invention to provide a straddle-type vehicle that can ensure necessary supporting rigidity of an engine bracket.

According to the present invention, said objective is solved by a straddle-type vehicle comprising: a vehicle body frame, an engine fixed to the vehicle body frame by means of at least one engine bracket, the engine bracket including a first flange portion connected to the vehicle body frame and a second flange portion connected to the engine, and wherein a distance between first fixing holes by which the first flange portion is fixed to the vehicle body frame is larger than a distance between second fixing holes by which the second flange portion is fixed to the engine.

Accordingly, the distance between the fixing holes in which the engine bracket is fixed to the vehicle body frame is larger than the distance between the fixing holes in which the engine bracket is fixed to the engine, so that the engine bracket can ensure necessary support rigidity of the vehicle body frame side. That is, the engine bracket has a large bending moment applied to the fixing portion of the vehicle body frame side by the vibrations or the like of the engine. However, in this embodiment, the engine bracket is increased in the size of the fixing portion of the vehicle body frame side to which the large bending moment is applied, so that the engine bracket can have the support rigidity increased and hence can ensure necessary support rigidity.

Preferably, the first and second fixing holes are substantially arranged so as to correspond to corners of an imaginary trapezoid.

Further, preferably the engine bracket comprises a substantially X-shaped cross coupling portion connecting the first and second fixing holes to each other.

Still further, preferably the vehicle body frame has a frame boss portion formed thereon, to which the first flange portion of the engine bracket is fixed, and, preferably, the first flange portion is fixed to a surface inside the frame boss portion in width direction of the straddle-type vehicle.

According to a preferred embodiment, the engine has at least one fixing boss portion formed thereon, to which the second flange portion of the engine bracket is fixed, and, preferably, the second flange portion is fixed to a surface outside the fixing boss portion in width direction of the straddle-type vehicle.

Preferably, the engine bracket is constructed of a plate-shaped member.

Further, preferably the engine bracket, preferably the plate-shaped member, has at least one opening formed therein, the opening passing preferably through in width direction of the straddle-type vehicle.

Still further, preferably the opening of the engine bracket is formed so as to avoid a line connecting the first and second fixing holes of the first and second flange portions.

According to another preferred embodiment, at least one throttle body is connected to the engine, and, preferably, the engine bracket at least partly covers the throttle body when viewed from a side of the straddle-type vehicle.

Preferably, the throttle body comprises an adjusting screw, and, preferably, the opening is formed in the engine bracket at a position facing the adjusting screw of the throttle body.

Further, preferably wherein the engine is a V-type engine in which cylinder blocks and cylinder heads are arranged so as to form a shape of a letter V in a front and rear direction of the straddle-type vehicle.

Still further, preferably the second flange portion of the engine bracket is connected to the front and rear cylinder heads.

Yet further still, preferably the second flange portion of the engine bracket is connected to the front and rear cylinder blocks.

Preferably, the engine is a single-cylinder or an in-line plural-cylinder engine, and, preferably, the second flange portion of the engine bracket is fixed to a cylinder head and/or a crankcase of said single-cylinder or said in-line plural-cylinder engine.

In the following, the present invention is explained in greater detail by means of embodiments thereof in conjunction with the accompanying drawings, wherein:
- Fig. 1: is a side view of a straddle-type vehicle, such as a motorcycle, according to an embodiment;

- Fig. 2: is a side view of an engine suspension part of the motorcycle;
- Fig. 3: is a side view of an engine bracket of the engine suspension part;
- Fig. 4: is a section view (section view taken on a line IV - IV shown in Fig. 3) of the engine bracket;
- Fig. 5: is a diagram of the engine bracket; and
- Fig. 6: is a diagram of an engine according to another embodiment.

Among others, the following reference signs are used in the figures:
1- motorcycle (straddle-type vehicle)
2- vehicle body frame
2c'- frame boss portion
8- V-type engine unit
8b- front cylinder block
8c- rear cylinder block
8d- front cylinder head
8f- rear cylinder head
10- engine bracket
10a- first flange portion
10b- second flange portion
10c- opening
10h- 10i- fixing hole
33- throttle body
33a- adjusting screw
50- parallel plural-cylinder engine
51- engine bracket
51a- first flange portion
51b-second flange portion
A- straight line
b- surface inside in vehicle width direction of boss portion
p1- distance between first flange portions
p2- distance between second flange portions

Hereinafter, an embodiment will be described with reference to the accompanying drawings.

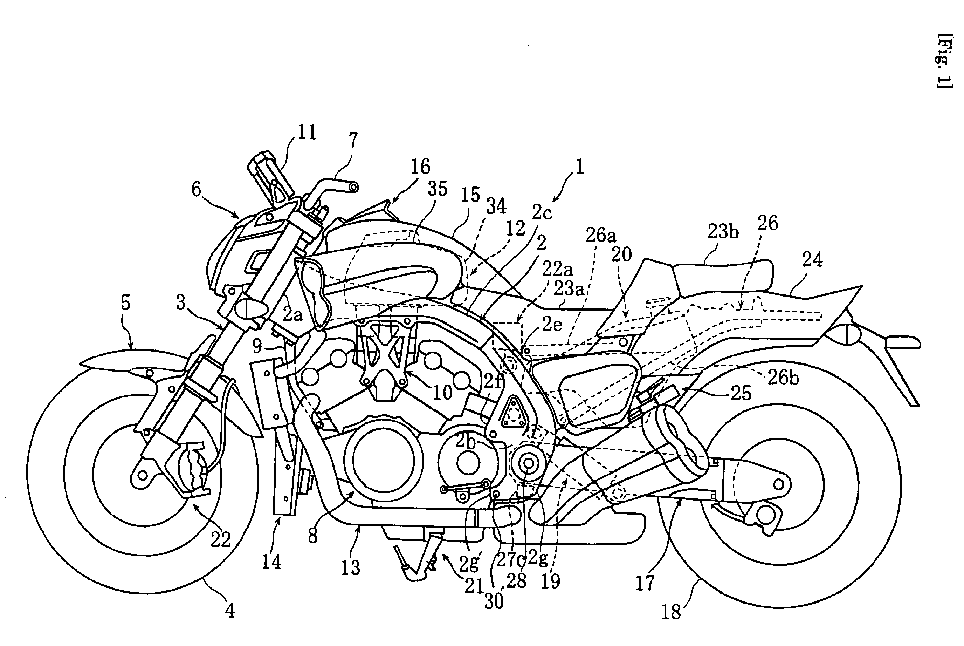

Figs. 1 to 5 are diagrams to show a straddle-type vehicle, such as a motorcycle, according to one embodiment. In general, a straddle-type vehicle has a body frame and a seat on which a rider can be seated straddling the body frame when being seated. Here, in the case of referring to front, rear, left, and right in the description of a part of this embodiment, unless otherwise specified, the front, rear, left, and right mean those when the part is viewed in a state where the rider sits on a seat.

In the diagrams, a reference numeral 1 denotes a motorcycle, and the motorcycle 1 has the general structure to be described below. A front fork 3 is supported by a head pipe 2a so as to be freely steered to the left and right, the head pipe 2a being positioned in the front end portion of a vehicle body frame 2.

A front wheel 4 has its axle supported by the lower end portion of the front fork 3. An upper portion of the front wheel 4 is covered by a front fender 5. The front fender 5 is fixed to a lower portion of the front fork 3.

Moreover, the front fork 3 has a head light unit 6 arranged on an upper portion thereof and has a steering handlebar 7 fixed to an upper end portion thereof. The head light unit 6 has a circular instrument 11 fixed thereto so as to be positioned forward of the steering handlebar 7, the instrument 11 having a speedometer and a tachometer.

Moreover, an engine unit 8 is suspended and supported by the vehicle body frame 2. This engine unit 8 has an air intake device 12 and an air exhaust device 13 connected thereto, and a radiator device 14 is arranged forward of the engine unit 8.

The air intake device 12 is covered from above by a frame cover 15 arranged in the front portion of the vehicle body frame 2. The frame cover 15 has a display device 16 arranged thereon, the display device 16 displaying the state of the vehicle.

Moreover, the engine unit 8 has a side stand device 21 arranged on the lower portion of a left wall thereof, the side stand device 21 erecting the motorcycle 1 in a state in which the motorcycle 1 is slightly inclined to the left side.

Furthermore, a rear arm 17 is supported by left and right rear arm bracket parts 2b so as to be swung up and down, and a rear wheel 18 has its axle supported by the rear end portion of the rear arm 17. This rear wheel 18 and the front wheel 4 are braked by a hydraulic brake system 22.

A rear wheel suspension device 19 is interposed between the rear arm 17 and the rear arm bracket part 2b, and the rear wheel suspension device 19 has a remote-controlled operating characteristic adjusting mechanism 25.

A fuel tank 20 is arranged above the rear wheel suspension device 19. A hydraulic control unit 22a of the brake system 22 is arranged obliquely forward of the fuel tank 20.

A straddle-type main seat 23a is arranged so as to cover the hydraulic control unit 22a and the fuel tank 20 from above. A rear fender 24 for covering the rear wheel 18 from above is arranged below a tandem seat 23b arranged on the rear side of the main seat 23a.

The vehicle body frame 2 includes: the head pipe 2a; left and right main frame parts 2c expanded outward in a vehicle width direction and extended obliquely rearward and downward from the head pipe 2a; and the left and right rear bracket parts 2b connected to the rear ends of the left and right main frame parts 2c and extended downward.

Moreover, the vehicle body frame 2 includes a rear frame 26 extended obliquely rearward and upward from the left and right rear bracket parts 2b. The rear frame 26 has left and right seat rail parts 26a and left and right seat stay parts 26b.

Each of the left and right rear bracket parts 2b has: an upper bracket portion 2e extended obliquely rearward and downward from the main frame part 2c; an engine suspension portion 2f projecting forward of the vehicle from the upper bracket portion 2e; a rear arm support portion 2g extended downward from the engine suspension portion 2f; and a lower engine suspension portion 2g' projecting forward from the rear arm support portion 2g.

A seat rail fixing boss portion 2h is formed on the rear surface of each of the left and right upper bracket portions 2e, and a seat stay fixing boss portion 2i is formed on the rear surface of the engine suspension portion 2f.

Moreover, the left and right upper bracket portions 2e are coupled to each other by an upper cross member 27a extended in the vehicle width direction. The left and right engine suspension portions 2f are coupled to each other by a middle cross member 27b. Further, the left and right rear arm support portions 2g are coupled to each other by a lower cross member 27c.

The front end portion of the rear arm 17 is supported by the left and right rear arm support portions 2g so as to be swung up and down via a pivot shaft 28.

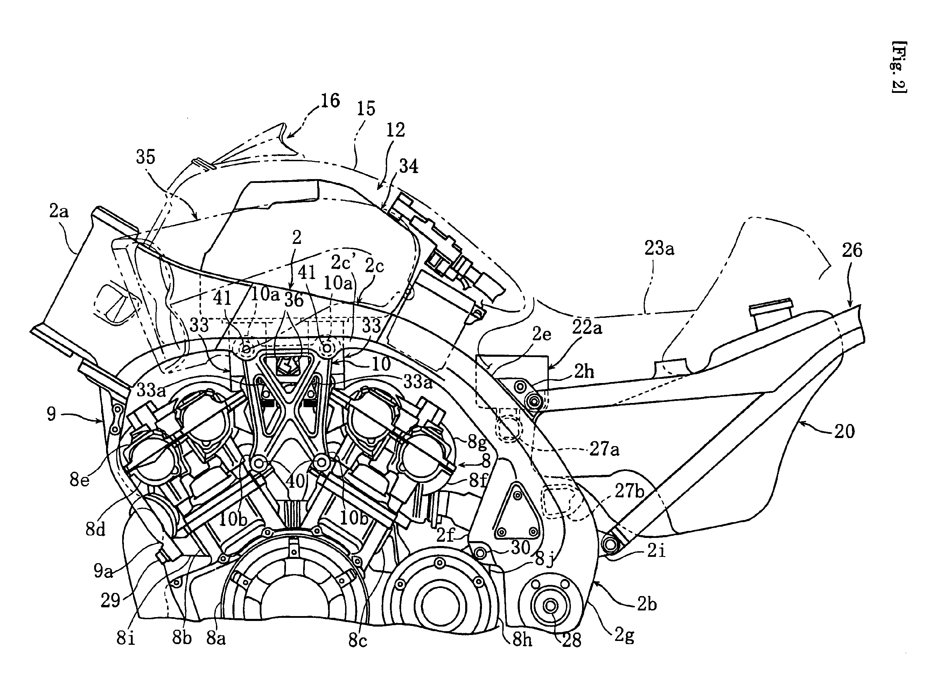

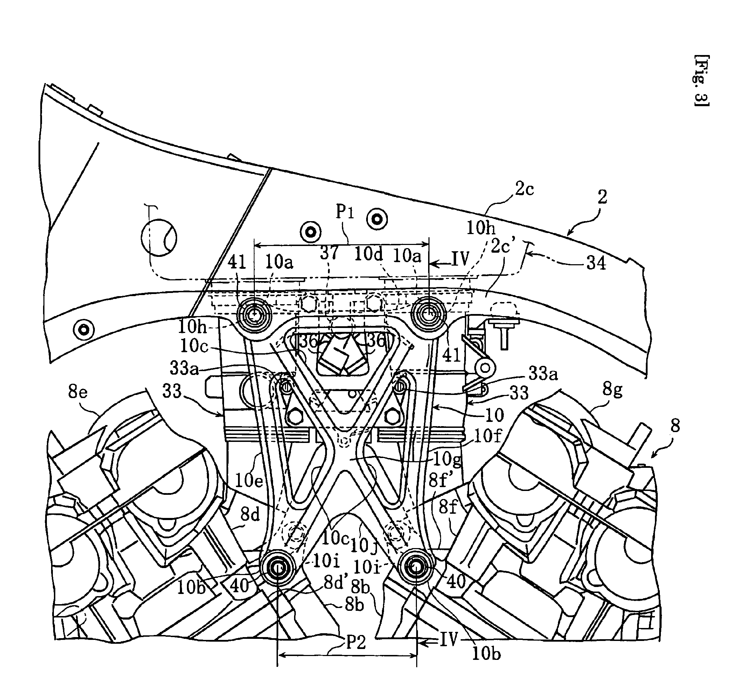

The engine unit 8 is a water cooling four cycle V-type four cylinder engine. The engine unit 8 has the following structure: that is, a front cylinder block 8b and a rear cylinder block 8c are formed so as to be connected to the upper portion of a crankcase 8a in such a way that they form a specified bank angle (about 60 degrees) between them in a front and rear direction; the front cylinder block 8b has a front cylinder head 8d and a front head cover 8e joined thereto; and the rear cylinder block 8c has a rear cylinder head 8f and a rear head cover 8g joined thereto. Moreover, the front crankcase 8a has a transmission case 8h connected to a rear end portion thereof, the transmission case 8h having a transmission mechanism (not shown) built therein (see Fig. 2, Fig. 3).

The air intake device 12 includes: throttle bodies 33, 33 connected to the respective cylinders in the V bank of the front cylinder head 8d and the rear cylinder head 8f and having throttle valves (not shown) built therein, the throttle valve being arranged so as to make its axis nearly vertical; a common air cleaner 34 connected to the respective throttle bodies 33, 33; and left and right air intake ducts 35, 35 for introducing running wind into the air cleaner 34.

The air cleaner 34 is interposed between the left and right main frame portions 2c, and the left and right air intake ducts 35, 35 are arranged outside in the vehicle width direction of the left and right main frame portions 2c of the air cleaner 34.

The respective throttle bodies 33, 33 have fuel injection valves 36 mounted thereon, the fuel injection valves 36 being arranged slantwise so as to cross each other in a front and rear direction when the vehicle is viewed from the side. The respective fuel injection valves 36 have a common fuel supply rail 37 connected to the upper end portions thereof.

The respective throttle bodies 33, 33 have adjusting screws 33a, 33a for adjusting an idle speed disposed thereon so that the adjusting screws 33a, 33a face outside in the vehicle width direction.

The engine unit 8 is suspended and supported by: a front engine bracket 9; left and right center engine brackets 10, 10; and the engine suspension portions 2f, 2g' of the left and right rear arm bracket parts 2b, 2b.

The front engine bracket 9 is fixedly fastened by bolts to the lower surfaces of the portions, connected to the head pipe 2a, of the left and right main frame parts 2c and is extended from the lower surface to the vicinity of the front side of the lower front cylinder block 8b.

The front wall portion of the front cylinder block 8b has a front boss portion 8i formed therein, the front boss portion 8i being projected forward. The front boss portion 8i is fixed to the lower end portion 9a of the front engine bracket 9 by a front suspension bolt 29 inserted from the front side.

The rear end portion of the upper wall of the transmission case 8h has a rear boss portion 8j formed therein, the rear boss portion 8j being projected upward. The rear boss portion 8j is fixed to the left and right engine suspension portions 2f by a rear suspension bolt 30 inserted from the side. Moreover, a lower end portion of the rear wall of the transmission case 8h has a lower end boss portion (not shown) formed therein so that the lower end boss portion is projected rearward. The lower end boss portion is fixed to the left and right engine suspension portions 2g' by a lower suspension bolt 30' inserted from the side.

The left and right center engine brackets 10, 10 are arranged so as to cover the respective throttle bodies 33, 33 in the V bank from the left and right sides in the vehicle width direction and have the following detailed structure. Here, the left and right center engine brackets 10, 10 have the nearly same structure, so that only the center engine bracket 10 arranged on the left side will be described and the description of the center engine bracket 10 arranged on the right side will be omitted.

The left center engine bracket 10 is constructed of a plate-shaped member manufactured by casting or forging and has: front and rear first flange portions 10a, 10a to be connected to the vehicle body frame 2; and front and rear second flange portions 10b, 10b to be connected to the engine unit 8.

The front and rear first flange portions 10a, 10a have upper fixing holes 10h, 10h, in which the front and rear first flange portions 10a, 10a are fixed to the vehicle body frame 2, formed therein. Moreover, the front and rear second flange portions 10b, 10b have lower fixing holes 10i, 10i, in which the front and rear second flange portions 10b, 10b are fixed the engine unit 8, formed therein. Preferably, the upper and lower fixing holes 10h, 10h, 10i, 10i are arranged so as to correspond to the corners of an imaginary trapezoid.

The center engine bracket 10 has first, second, and third openings 10c, 10c, and 10c formed therein, these openings 10c passing through the center engine bracket 10 in the vehicle width direction. The first opening 10c is formed at a position facing the fuel injection valves 36 and in an inverse triangular shape extended toward a central portion. Moreover, the second and third openings 10c, 10c are formed at positions facing the adjusting screw 33a, 33a of the front and rear throttle bodies 33, 33, and in a triangular shape extended toward the central portion.

Since the center engine bracket 10 has the first to third openings 10c, 10c, and 10c formed therethrough, the center engine bracket 10 has: an upper side coupling portion 10d that couples the front and rear first flange portions 10a, 10a; a front side coupling portion 10e that couples the front first flange portion 10a and the front second flange portion 10b; a rear side coupling portion 10f that couples the rear first flange portion 10a and the rear second flange portion 10b; and a cross coupling portion 10g that couples the front first flange portion 10a and the rear second flange portion 10b, couples the rear first flange portion 10a and the front second flange portion 10b, and is formed nearly in a shape of a letter X. Here, the front and rear second flange portions 10b, 10b are not required particularly to have rigidity. Thus, from the viewpoint of reducing weight, a depressed portion 10j shaped like a cutout is formed between the front and rear second flange portions 10b, 10b.

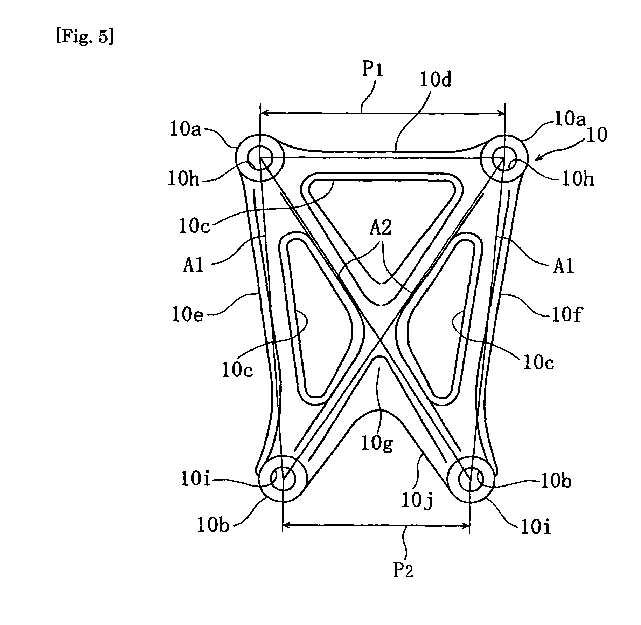

The first to third openings 10c to 10c are formed not to cross respective straight lines A connecting the fixing holes 10h, 10h of the front and rear first flange portions 10a, 10a and the fixing holes 10i, 10i of the front and rear second flange portions 10b, 10b. With this, the respective straight lines A are positioned on the upper side coupling portion 10d, the front side coupling portion 10e, the rear side coupling portion 10f, and the cross coupling portion 10g (see Fig. 5).

A distance p1 between the fixing holes 10h, 10h of the front and rear first flange portions 10a, 10a is set larger than a distance p2 between the fixing holes 10i, 10i of the front and rear second flange portions 10b, 10b. With this, a distance between the front side coupling portion 10e and the rear side coupling portion 10f becomes larger to an upper side from a lower side.

The center engine bracket 10 has the front and rear first flange portions 10a, 10a fixed to the main frame part 2c and has the front and rear second flange portions 10b, 10b fixed to the engine unit 8. Describing in detail, the center engine bracket 10 has the following structure.

The main frame part 2c has a frame boss portion 2c' formed inside in the vehicle width direction in the lower edge portion thereof so as to be stepwise.

The engine unit 8 has a front fixing boss portion 8d' and a rear fixing boss portion 8f' formed respectively in the outside portions in the vehicle width direction of the front cylinder head 8d and the rear cylinder head 8f thereof in such a way that the front fixing boss portion 8d' and the rear fixing boss portion 8f are projected into the V bank.

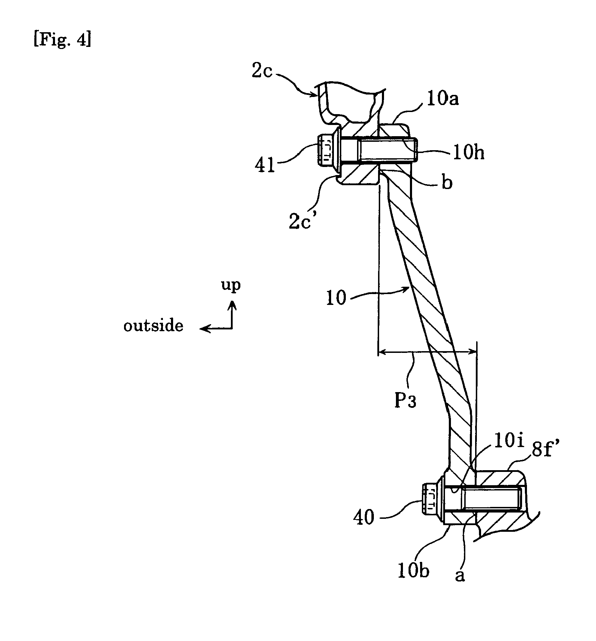

The center engine bracket 10 has the front and rear second flange portions 10b, 10b fixed to the surfaces a, a outside in the vehicle width direction of the front fixing boss portion 8d' and the rear fixing boss portion 8f by lower coupling bolts 40, 40 inserted from the outside (see Fig. 4).

Moreover, the center engine bracket 10 has the front and rear first flange portions 10a, 10a fixed to the surfaces b, b inside in the vehicle width direction of the frame boss portion 2c' by upper coupling bolts 41, 41 inserted from the outside.

According to this embodiment, in each of the left and right center engine brackets 10, a distance p1 between the fixing holes 10h, 10h of the front and rear first flange portions 10a, 10a made larger than a distance p2 between the fixing holes 10i, 10i of the front and rear second flange portions 10b, 10b. Thus, the center engine bracket 10 can have rigidity on its vehicle body frame side increased and hence can ensure necessary support rigidity for engine load. That is, the center engine bracket 10 has a large bending moment applied to the first flange portions 10a, 10a, which are the fixing portions of the vehicle body frame 2, by the vibrations or the like of the engine 8. However, in this embodiment, the size between the first flange portions 10a, 10a to which the large bending moment is applied is made larger, so that the center engine bracket 10 can have the support rigidity increased and hence can ensure necessary support rigidity.

In this embodiment, the front and rear first flange portions 10a, 10a of the center engine bracket 10 are fixed to the surfaces b, b inside in the vehicle width direction of the frame boss portion 2c' of the main frame part 2c, and the front and rear second flange portions 10b, 10b of the center engine bracket 10 are fixed to the surfaces a, a outside in the vehicle width direction of the front fixing boss portions 8d' and the rear fixing boss portion 8f of the engine unit 8. Thus, a distance p3 in the vehicle width direction between the first flange portion 10a and the second flange portion 10b can be made small, and hence the center engine bracket 10 can have its rigidity increased and can have its shape made compact. In other words, when the first flange portions of the engine bracket are fixed to the outside surface of the vehicle body frame, a distance in the vehicle width direction between the first and second flange portions is increased. As a result, the curvature of the coupling portion for coupling the first and second flange portions is increased, which makes the engine bracket disadvantageous in rigidity.

In this embodiment, the center engine bracket 10 is constructed of a plate-shaped member and has the first to third openings 10c formed therein so that the first to third openings 10c pass through in the vehicle width direction, so that the center engine bracket 10 can be reduced in weight.

When the respective openings 10c are formed, the respective openings 10c do not cross or cut the respective straight lines A connecting the fixing holes 10h, 10h of the front and rear first flange portions 10a, 10a and the fixing holes 10i, 10i of the front and rear second flange portions 10b, 10b. Thus, the center engine bracket 10 can have its weight reduced and can ensure necessary rigidity.

In this embodiment, the second and third openings 10c, 10c are formed at the positions facing the adjusting screws 33a, 33a of the front and rear throttle bodies 33, 33, so that the adjusting of the idle speed can be easily performed. Moreover, the first opening 10c is formed at the position facing the fuel injection valves 36, 36, so that maintenance around the fuel injection valves 36, 36 can be easily performed.

In this embodiment, the front and rear second flange portions 10b, 10b of the center engine bracket 10 are fixed in the V bank of the front cylinder head 8d and the rear cylinder head 8f of the V-type engine unit 8. Thus, the center engine bracket 10 can be reduced in size including a size in the up and down direction.

In this regard, in the embodiment, a case where the center engine bracket 10 is fixed to the front cylinder head 8d and the rear cylinder head 8f has been described. However, in the embodiment, the center engine bracket 10 may be fixed to the front cylinder block 8b and the rear cylinder block 8c. In this case, the center engine bracket 10 can be further increased in the strength of supporting the engine.

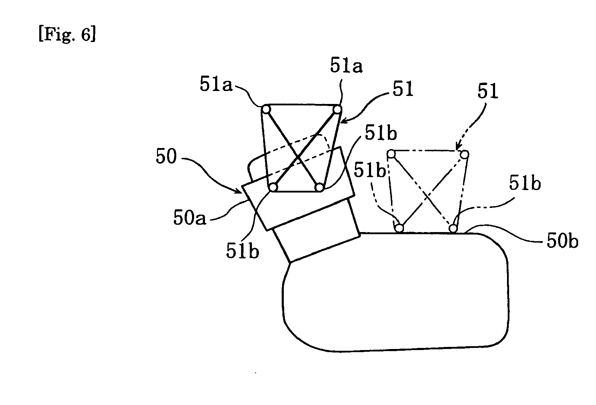

Moreover, in the embodiment, the V-type engine has been described by way of example. However, as shown in Fig. 6, the present teaching can be applied also to a single-cylinder or parallel (in-line) plural-cylinder engine 50. In this case, the first flange portions 51 a, 51 a of an engine bracket 51 are fixed to the vehicle frame (not shown), and the second flange portions 51 b, 51b of the engine bracket 51 are fixed to the cylinder head 50a or the crankcase 50b of the engine 50. Also in this case, the nearly same effect as the above-mentioned embodiment can be produced.

Furthermore, in the embodiment, the motorcycle has been described by way of example. However, the present teaching can be applied also to a motor-driven three- or four-wheeled vehicle mounted with a straddle-type seat, and a straddle-type vehicle for running on an uneven terrain.

The description above discloses (among others) an embodiment of a straddle-type vehicle comprising: a vehicle body frame; an engine fixed to the vehicle body frame; and an engine bracket for fixing the engine to the vehicle body frame, wherein the engine bracket includes a first flange portion connected to the vehicle body frame and a second flange portion connected to the engine, and wherein a distance between fixing holes in which the first flange portion is fixed to the vehicle body frame is larger than a distance between fixing holes in which the second flange portion is fixed to the engine.

Preferably, the vehicle body frame has a boss portion formed thereon, the boss portion having the first flange portion fixed thereto, and the first flange portion of the engine bracket is fixed to a surface inside in a vehicle width direction of the boss portion.

Further, preferably the engine has a boss portion formed thereon, the boss portion having the second flange portion fixed thereto, and the second flange portion of the engine bracket is fixed to a surface outside in a vehicle width direction of the boss portion.

Further, preferably the engine bracket is constructed of a plate-shaped member, and the plate-shaped member has an opening formed therein, the opening passing through in a vehicle width direction.

Further, preferably the opening of the engine bracket is formed so as not to cross a line connecting the fixing holes of the first flange portion and the fixing holes of the second flange portion.

Further, preferably a throttle body is connected to the engine and has an adjusting screw, the engine bracket is arranged so as to cover the throttle body from a side in a vehicle width direction, and the opening is formed at a position facing the adjusting screw of the throttle body.

Further, preferably the engine is a V-type engine in which cylinder bodies and cylinder heads are arranged so as to form a shape of a letter V in a front and rear direction, and the second flange portion of the engine bracket is connected to the front and rear cylinder heads.

Further, preferably the engine is a V-type engine in which cylinder bodies and cylinder heads are arranged so as to form a shape of a letter V in a front and rear direction, and the second flange portion of the engine bracket is connected to the front and rear cylinder bodies.

In order to provide a straddle-type vehicle that can ensure supporting rigidity necessary for an engine bracket, the following embodiment is suggested: The engine bracket 10 includes a first flange portion 10a connected to a vehicle body frame 2 and a second flange portion 10b connected to an engine 8, and a distance p1 between fixing holes 10h in which the first flange portion 10a is fixed to the vehicle body frame is larger than a distance p2 between fixing holes 10i in which the second flange portion 10b is fixed to the engine.

## Claims

1. Straddle-type vehicle comprising:
a vehicle body frame (2);
an engine (8,50) fixed to the vehicle body frame (2) by means of at least one engine bracket (10,51), the engine bracket (10,51) including a first flange portion (10a,51a) connected to the vehicle body frame (2) and a second flange portion (10b,51b) connected to the engine (8,50), and
wherein a distance (P1) between first fixing holes (10h) by which the first flange portion (10a,51a) is fixed to the vehicle body frame (2) is larger than a distance (P2) between second fixing holes (10i) by which the second flange portion (10b,51b) is fixed to the engine (8,50).

2. Straddle-type vehicle according to claim 1, wherein the first and second fixing holes (10h,10i) are substantially arranged so as to correspond to corners of an imaginary trapezoid.

3. Straddle-type vehicle according to claim 1 or 2, wherein the engine bracket (10,51) comprises a substantially X-shaped cross coupling portion (10g) connecting the first and second fixing holes (10h,10i) to each other.

4. Straddle-type vehicle according to one of claims 1 to 3, wherein the vehicle body frame (2) has a frame boss portion (2c') formed thereon, to which the first flange portion (10a,51a) of the engine bracket (10,51) is fixed, and, preferably, the first flange portion (10a,51a) is fixed to a surface inside the frame boss portion (2c') in width direction of the straddle-type vehicle.

5. Straddle-type vehicle according to one of claims 1 to 4, wherein the engine (8) has at least one fixing boss portion (8d', 8f') formed thereon, to which the second flange portion (10b,51b) of the engine bracket (10, 51) is fixed, and, preferably, the second flange portion (10b, 51b) is fixed to a surface outside the fixing boss portion (8d', 8f') in width direction of the straddle-type vehicle.

6. Straddle-type vehicle according to one of claims 1 to 5, wherein the engine bracket (10,51) is constructed of a plate-shaped member.

7. Straddle-type vehicle according to one of claims 1 to 6, wherein the engine bracket (10,51), preferably the plate-shaped member, has at least one opening (10c) formed therein, the opening (10c) passing preferably through in width direction of the straddle-type vehicle.

8. Straddle-type vehicle according to claim 7, wherein the opening (10c) of the engine bracket (10,51) is formed so as to avoid a line (A1,A2) connecting the first and second fixing holes (10h,10i) of the first and second flange portions (10a, 51a; 10b, 51b).

9. Straddle-type vehicle according to one of claims 1 to 8, wherein at least one throttle body (33) is connected to the engine (8), and, preferably, the engine bracket (10,51) at least partly covers the throttle body (33) when viewed from a side of the straddle-type vehicle.

10. Straddle-type vehicle according to claim 9, wherein the throttle body (33) comprises an adjusting screw (33a), and, preferably, the opening (10c) is formed in the engine bracket (10, 51) at a position facing the adjusting screw (33a) of the throttle body (33).

11. Straddle-type vehicle according to one of claims 1 to 10, wherein the engine (8) is a V-type engine in which cylinder blocks (8b, 8c) and cylinder heads (8d, 8f) are arranged so as to form a shape of a letter V in a front and rear direction of the straddle-type vehicle.

12. Straddle-type vehicle according to claim 11, wherein the second flange portion (10b) of the engine bracket (10) is connected to the front and rear cylinder heads (8d,8f).

13. Straddle-type vehicle according to claim 11, wherein the second flange portion (10b) of the engine bracket (10) is connected to the front and rear cylinder blocks (8b,8c).

14. Straddle-type vehicle according to one of claims 1 to 10, wherein the engine (50) is a single-cylinder or an in-line plural-cylinder engine, and, preferably, the second flange portion (51 b) of the engine bracket (51) is fixed to a cylinder head (50a) and/or a crankcase (50b) of said single-cylinder or said in-line plural-cylinder engine.
